# EUROPEAN PATENT SPECIFICATION

(11) **EP 3 368 341 B1**
(45) Date of publication and mention of the grant of the patent: **25.09.2019**
(21) Application number: 16787684.6
(22) Date of filing: 18.10.2016
(51) Int. Cl.: B60C 11/00, B60C 11/12, B60C 11/03

(54) **TIRE TREAD WITH TEARDROP SIPES AND AREAS OF VARYING RIGIDITY**
REIFENLAUFFLÄCHE MIT TROPFENFÖRMIGEN FEINEINSCHNITTEN UND BEREICHEN MIT UNTERSCHIEDLICHER STEIFIGKEIT
BANDE DE ROULEMENT DE PNEUMATIQUE AYANT DES LAMELLES EN FORME DE GOUTTE D'EAU ET DES ZONES DE RIGIDITÉ VARIABLE

(30) Priority: 30.10.2015 WO PCT/US2015/058210
(43) Date of publication of application: 05.09.2018
(73) Proprietor: Compagnie Générale des Etablissements Michelin, 63000 Clermont-Ferrand (FR)
(72) Inventor: LAWSON, Robert, Greenville, SC 29605 (US); KOSE, Sadi, Greenville, SC 29605 (US)
(74) Representative: Casalonga
(86) International application number: PCT/US2016/057471
(87) International publication number: WO 2017/074736

(56) References cited:
- WO-A1-2014/090845
- JP-B2- 3 110 847

## Description

### FIELD OF THE INVENTION

The present invention relates generally to a tire that has teardrop sipes and tread that has areas of different rigidity. More particularly, the present application involves a tire with tread that has more rigid materials where teardrop sipes are located, and less rigid materials where teardrop sipes are not located, or if they are located are of a smaller size, in order to achieve improvements in tire wear and in tire wet adherence.

### BACKGROUND

Tires, as shown in WO2014/090845 A1, normally include tread that has a series of sipes that can function to improve traction in certain road conditions. The sipes are thin slits cut into the tread and may be configured in a variety of manners, such as straight, zigzagging, undulating, or angled, into the tire elements. The sipe depths may also vary or be consistent along their lengths, and may extend into the tread all the way to the end of life tread depth. The sipes may close within the tire "footprint" on the road and can increase the flexibility of the tread block into which the sipes are located. The presence of sipes can improve stopping distance, breakaway traction, and rolling traction on glare ice. Additionally sipes have been found to improve traction for tires in snow, mud, and other types of ice.

From JP3110847B2 it is known to provide sipes with a teardrop shape that tends to increase snow and wet traction of the tire when the tire is near the end of its life. The teardrop feature in the sipe is an increase in the cross-sectional size of the sipe at an area of the sipe closer to the center of the tire in the radial direction. This increase in cross-sectional size causes the sipe to have a larger void radially closer to the tire center than portions of the sipe radially farther from the tire center. When the tire tread wears down, the larger void portion will open up and be exposed to the road surface and will improve traction and water removal when the tire is nearing the end of its life.

Although the inclusion of teardrop sipes helps improve tire performance in certain areas, such as end-of-life wet traction, they tend to increase rolling resistance. It is known to make tire tread of multiple types of materials, and the inclusion of softer tread materials into which the teardrop sipes are located can be used to further improve wet traction. However, the softer materials can also degrade the integrity of the tire sculpture under wear. The addition of teardrop sipes into the shoulder area of the tire tread causes compressive losses to be more dominant, and with the addition of softer materials into the shoulder area of the tread rolling resistance and wear are increased.

Because there is a reduction of tire performance in certain areas upon the inclusion of teardrop sipes and softer materials in tread, refinement of teardrop sipe and material rigidity may function to minimize or eliminate these negative qualities. As such, there remains room for variation and improvement within the art.

### BRIEF DESCRIPTION OF THE DRAWINGS

A full and enabling disclosure of the present invention, including the best mode thereof, directed to one of ordinary skill in the art, is set forth more particularly in the remainder of the specification, which makes reference to the appended Figs. in which:
Fig. 1 is a perspective view of a tire with teardrop sipes and with tread of varying rigidity.
Fig. 2 is a cross-sectional view of a tire with teardrop sipes and a first material in the outboard and inboard shoulder areas, and with second and third materials in the center area.
Fig. 3 is a cross-sectional view of a tire with only second material in the center area.
Fig. 4 is a cross-sectional view of a tire without ribs or circumferential grooves.
Fig. 5 is a cross-sectional view of a tire in which the first material extends in the axial direction along the entire tread.
Fig. 6 is a cross-sectional view of a tire in which six different materials are present in the tread.
Fig. 7 is a cross-sectional view of the tire in which a wavy interface is present between the second material and the third material.
Fig. 8 is a cross-sectional view of the tire in which the first material is in the center area of the tread, and in which the second material and the third material are in the inboard shoulder area and the outboard shoulder area.
Fig. 9 is a cross-sectional view of the tire that also includes a portion of the tire shown in circumferential extension.

Repeat use of reference characters in the present specification and drawings is intended to represent the same or analogous features or elements of the invention.

### DETAILED DESCRIPTION OF REPRESENTATIVE EMBODIMENTS

Reference will now be made in detail to embodiments of the invention, one or more examples of which are illustrated in the drawings. Each example is provided by way of explanation of the invention, and not meant as a limitation of the invention. For example, features illustrated or described as part of one embodiment can be used with another embodiment to yield still a third embodiment. It is intended that the present invention include these and other modifications and variations.

It is to be understood that the ranges mentioned herein include all ranges located within the prescribed range. As such, all ranges mentioned herein include all sub-ranges included in the mentioned ranges. For instance, a range from 100-200 also includes ranges from 110-150, 170-190, and 153-162. Further, all limits mentioned herein include all other limits included in the mentioned limits. For instance, a limit of up to 7 also includes a limit of up to 5, up to 3, and up to 4.5.

The present invention provides for a tire 10 that has tread 12 of varying areas of rigidity that are formed by the inclusion of different materials that have different degrees of rigidity. Teardrop sipes 38 are included in the tread areas of higher rigidity, and are avoided in the areas of less rigidity to prevent increased compressive losses due to the presence of teardrop sipes 38 in softer tread materials. The areas of higher rigidity may be in the outboard shoulder area 40 and the inboard shoulder area 42 of the tread 12, while the areas of lesser rigidity are found in the center area 44 of the tread 12. The tire 10 may enjoy the benefit of increased traction from the use of teardrop sipes 38 with the additional benefit of improved sculpture robustness due to the teardrop sipes 38 being located within areas of higher rigidity. New and worn wet adherence may be achieved from the areas that include softer tread 12 materials, and the absence of teardrop sipes 38 in these areas may function to increase wear resistance in these areas. The tread 12 may be arranged so that more rigid tread materials are located around the teardrop sipes 38, while softer tread materials are found in other parts of the tread 12 where teardrop sipes 38 are not present. In some arrangements, there may be teardrop sipes 38 present in the softer tread materials, but in these instances there will always be a larger teardrop sipe 38 present in the more rigid tread materials.

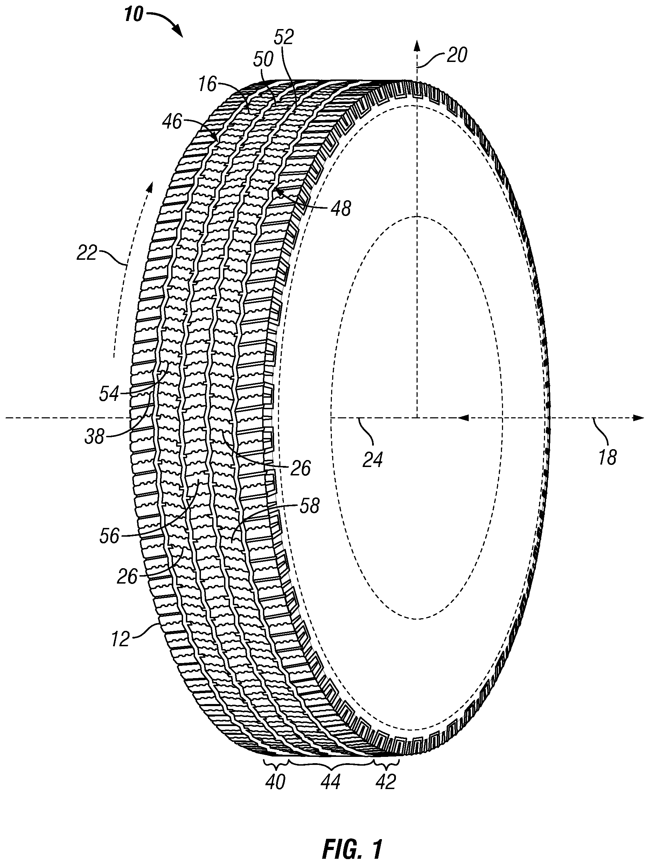

With reference to Fig. 1, a tire 10 in accordance with one exemplary embodiment is shown. The tire 10 has an axis of rotation about a central axis 24, and the tread 12 of the tire 10 is spaced from the central axis 24 in a radial direction 20 of the tire 10. The tread 12 extends 360 degrees around the central axis 24 in the circumferential direction 22 of the tire 10. The tread 12 has an outboard shoulder area 40 and an inboard shoulder area 42 that are spaced from one another in the axial direction 18. The outboard shoulder area 40 is farther outboard on a vehicle than the inboard shoulder area 42 when the tire 10 is placed onto the vehicle. The tread 12 has a center area 44 that is between the outboard shoulder area 40 and the inboard shoulder area 42 in the axial direction 20. The various areas 40, 42 and 44 all extend 360 degrees about the central axis 24 in the circumferential direction 22.

The tread 12 includes a series of circumferential grooves 46, 48, 50 and 52 that extend 360 degrees around the central axis 24 in the circumferential direction 22. The first circumferential groove 46 separates the outboard shoulder area 40 from a first rib 54 in the axial direction 18. The second circumferential groove 48 separates the inboard shoulder area 42 from a third rib 58 of the tread 12 in the axial direction 18. The third circumferential groove 50 separates the first rib 54 and the second rib 56 in the axial direction 18. The fourth circumferential groove 52 separates the second rib 56 and the third rib 58 from one another in the axial direction 18. The various ribs 54, 56 and 58 and circumferential grooves 46, 48, 50 and 52 of the tread 12 all extend 360 degrees around the central axis 24 in the circumferential direction 22.

The tread 12 includes sipes 26 in the ribs 54, 56 and 58, and teardrop sipes 38 in the outboard and inboard shoulder areas 40 and 42. The sipes 26 and teardrop sipes 38 are shown running in a zig-zag fashion generally in the axial direction 18. The sipes 26 and teardrop sipes 38 can be variously arranged in that they may extend at an angle to the axial direction 18 so as to have some component of extension in the axial direction 18 and some component of extension in the circumferential direction 22. The shapes, sizes, and orientations of the sipes 26 and teardrop sipes 38 can be variously arranged in accordance with different exemplary embodiments.

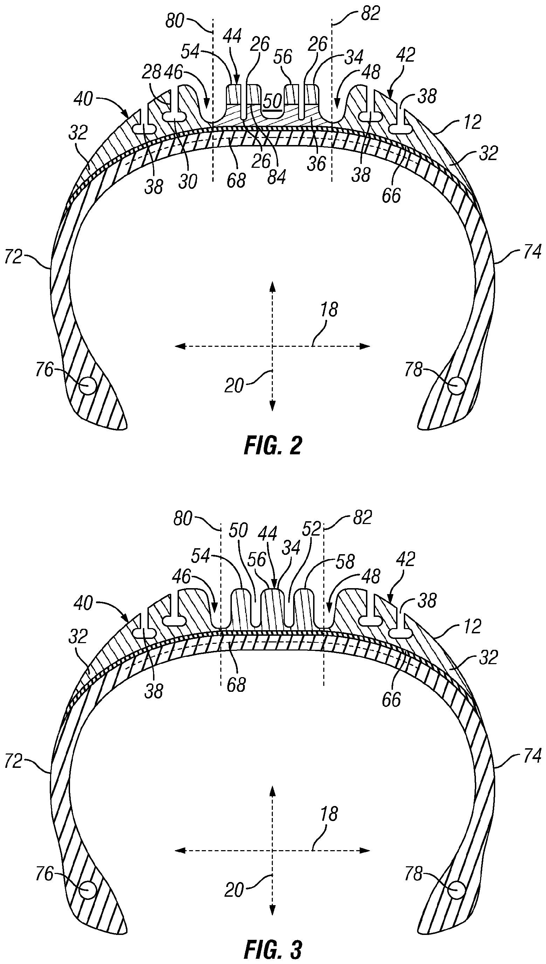

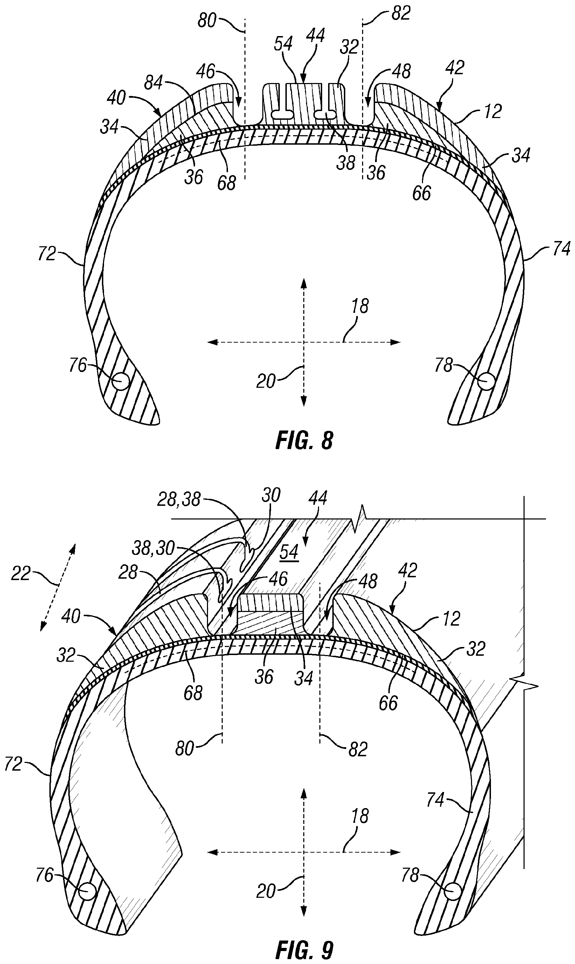

Fig. 2 is a cross-sectional view of the tire 10 in accordance with one exemplary embodiment. Two sipes 26 and four teardrop sipes 38 are shown in the tread 12 of Fig. 2. The sipes 26 are narrow slits made into the tread 12 and have a cross-sectional width that is not greater than 2 millimeters. The sipes illustrated in Fig. 2 are longitudinal sipes. However, it is to be understood that when used herein that the term sipe or sipes is broad enough to cover both longitudinal sipes and lateral/transverse sipes. The lateral/transverse sipes are illustrated in Fig. 9 for sake of example. Again, the sipes 26 and teardrop sipes 38 discussed may be either longitudinal, lateral, or some combination of the two in various embodiments. The sipes 26 may extend any distance in the radial direction 20 from the upper surface of the tread 12 to the under tread 66. The teardrop sipes 38 likewise extend from the upper surface of the tread 12 in the radial direction 20. The teardrop sipes 38 have an upper portion 28 that is the portion of the teardrop sipes 38 farthest from the central axis 24 in the radial direction 20. The upper portions 28 are the narrowest portions in cross-sectional width and may have a consistent cross-sectional width upon their entire length in the radial direction 20. The teardrop sipes 38 also have teardrop voids 30 that are contiguous with the upper portions 28 and that are located closer to the central axis 24 in the radial direction 20 than the upper portions 28. The teardrop voids 30 are wider than the upper portions 28 in cross-sectional width and have cross-sectional shapes that are different than that of the upper portions 28 in that they tend to expand and contract in cross-sectional width upon their extension in the radial direction 20. The teardrop sipes 38 are thus distinguished from the sipes 26 in that they have teardrop voids 38 located at their bottom ends in the radial direction 20 that have cross-sectional shapes different and wider than the cross-sectional shapes of the upper portions 28 of the slits.

The tire 10 has a pair of beads each having a bead core 76, 78 located therein that are closer to the central axis 24 in the radial direction 20 than the tread 12. Sidewalls 72 and 74 are located farther from the central axis 24 than the bead cores 76, 78 and extend to an under tread 66. One or more metal belts 68, which may in various instances be steel belts, are located under the under tread 66 and are closer to the central axis 24 in the radial direction 20 than certain portions of the under tread 66. The tread 12 has an outboard shoulder area 40 located on top of the under tread 66 so as to be farther from the central axis 24 than the under tread 66 in the radial direction 20. The outboard shoulder area 40 extends in the axial direction 18 to the first circumferential groove 46. In other arrangements, the outboard shoulder area 40 can be the portion of the tread 12 that is at the outboard shoulder of the tire 10 which is the portion of the tire 10 between the outboard sidewall 72 and the portion of the tread 12 that is generally flat upon contact with the road surface. In other arrangements, the outboard shoulder area 40 may be some percentage of the overall axial length of the tread 12 in the axial direction 18 such as from 1-5%, from 5%-10%, from 10%-15%, from 15%-20%, from 20%-25%, or up to 40%. A boundary line 80 is noted in Fig. 2, and in the rest of the cross-sectional figures, to denote the boundary between the outboard shoulder area 40 and the center area 44 of the tread 12.

An inboard shoulder area 42 is located on the side of the tread 12 opposite to the outboard shoulder area 40 in the axial direction 18. The inboard shoulder area 42 is the part of the tread 12 that is most inboard when the tire 10 is placed onto the vehicle. The inboard shoulder area 42 is located on top of the under tread 66 and extends in the axial direction 18 to the second circumferential groove 48. The boundary line 82 denotes the boundary between the inboard shoulder area 42 and the center area 44, and this boundary line 82 is illustrated as well in the other cross-sectional figures. The inboard shoulder area 42 could be the portion of the tread 12 that is at the inboard shoulder of the tire 10 which is the portion of the tire 10 between the inboard sidewall 74 and the portion of the tread 12 that is generally flat upon contact with the road surface. In other arrangements, the inboard shoulder area 42 may be some percentage of the overall axial length of the tread 12 in the axial direction 18 such as from 1-5%, from 5%-10%, from 10%-15%, from 15%-20%, from 20%-25%, or up to 40%.

The tread 12 has a center area 44 that is located between the outboard shoulder area 40 and the inboard shoulder 42 in the axial direction 18. The boundary lines 80 and 82 are used to denote the separation between the center area 44 and the outboard and inboard shoulder areas 40, 42. The center area 44 includes a third circumferential groove 50 that is defined between a first rib 54 and a second rib 56. The center area 44 can include any number of circumferential grooves, ribs, and other features in accordance with other exemplary embodiments. The center area 44 is likewise located above the under tread 66 so as to be farther from the central axis 24 in the radial direction 20 of the tire 10.

The tread 12 includes a first material 32 into which the teardrop sipes 38 are located. The first material 32 of the tread 12 is located at the outboard shoulder area 40 and at the inboard shoulder area 42 and forms a road contact portion of the tread 12. The teardrop sipes 38 are located at both the inboard and outboard shoulder areas 40 and 42 and are defined completely by the first material 32. The first material 32 may be relatively rigid so as to have a high modulus value. Placement of the teardrop sipes 38 into the first material 32 may increase the robustness of the tread 12 sculpture due to the rigidity of the first material 32. The shoulder areas 40 and 42 may receive the benefits of the teardrop sipes 38 such as improved wet traction, and may also avoid compressive losses due to the use of teardrop sipes 38 with soft material since the first material 32 is a rigid material. Teardrop sipes 38 may be considered to be most effective for wet traction when used in the outboard and inboard shoulder areas 40, 42, but it is to be understood that the teardrop sipes 38 may be found in other portions of the tread 12 in addition to or alternatively to the outboard and inboard shoulder areas 40 and 42. In certain exemplary embodiments, the teardrop sipes 38 are only located in the outboard and inboard shoulder areas 40, 42 and are not located in the center area 44.

The tread 12 includes a second material 34 and a third material 36 that are located at the center area 44. The second material 34 and third material 36 are softer than the first material 32 in that modulus values of the second and third materials 34 and 36 are less than the modulus value of the first material 32. The second material 34 can be more rigid than the third material 36 in that the modulus value of the second material 34 is greater than the modulus value of the third material 36. In the Fig. 2 embodiment, the second material 34 forms the initial exterior portion of the ribs 54 and 56. The third material 36 engages the second material 34 and is located radially inward from the second material 34 in the radial direction 20 so as to be located closer to the central axis 24. The sipes 26 are located in both the second material 34 and the third material 36 and may extend all the way through the materials 34, 36 to the under tread 66. No teardrop sipes 38 are located in the second material 34, the third material 36, or in the center area 44. The use of softer tread 12 materials 34 and 36 in the center area 44 may improve new and worn wet adherence as they may achieve better indentation. The presence of sipes 26 in the second and third materials 34, 36 in the center area 44 may likewise improve new and worn wet adherence. The tread 12 is arranged so that the first material 32 is not located in the center area 44, and so that the second material 34 and the third material 36 are not located at the outboard shoulder area 40 and are not located at the inboard shoulder area 42. At least two of the materials 32, 34, or 36 can form a road contacting portion of the tread 12 that engage the road 12 during use of the tire 10.

The second material 34 may have a modulus value that is from 50%-88% of the modulus value of the first material 32. In other exemplary embodiments, the second material 34 may have a modulus value that is from 50%-63%, from 50%-75%, from 63%-75%, from 63%-88%, from 75%-88%, from 60%-70%, from 60%-80%, from 70%-75%, from 70%-80%, or from 80%-88% of the first material 32 in accordance with different exemplary embodiments.

The third material 36 may have a modulus value that is from 38%-75% of the modulus value of the first material 32. In other exemplary embodiments, the third material 36 may have a modulus of value that is from 38%-50%, from 38%-63%, from 50%-63%, from 50%-75%, from 63%-75%, from 40%-50%, from 45%-55%, from 50%-60%, from 55%-65%, from 60%-70%, from 65%-75%, or from 70%-75% of the first material 32 in accordance with different exemplary embodiments.

The modulus, sometimes referred to as the complex shear modulus, may be denoted by the designation G*. The modulus G* of the particular material may be measured with the material at 60 degrees centigrade and may be expressed in units of mega pascals (MPa). The dynamic property G* may be measured on a Metravib Model VA400 ViscoAnalyzer Test System in accordance with ASTM D5992-96. The response of a sample of vulcanized material (double shear geometry with each of two 10 mm diameter cylindrical samples being 2 mm thick) can be recorded as it was being subjected to an alternating single sinusoidal shearing stress of a constant 0.7 MPa and at a frequency of 10 Hz over a temperature sweep from -60 °C to 100 °C with the temperature increasing at a rate of 1.5 °C/min. The shear modulus G* at 60 °C may be captured. As used herein, unless otherwise noted, the shear modulus G* at 60 °C is determined in accordance with ASTM 5992-96 and expressed in MPa. As used herein, the term "modulus" or "modulus G*" may also be referred to as or known as the complex shear modulus G* at 60 °C, or as the shear modulus G* at 60 °C, or as G* complex shear modulus at 60 °C.

As an example, assume the first material 32 has a modulus G* of 1.6 MPa, and that the second material 34 has a modulus G* that is from 50%-88% of the modulus of the first material 32. In this example, the second material 34 would have a modulus G* from 0.8 MPa to 1.4 MPa. A modulus G* of 0.8 MPa would be 50% of the 1.6 MPa modulus of the first material 32. The modulus G* of 1.4 MPa would be 87.5% or 88% of the modulus G* of 1.6 MPa of the first material 32. Also in this example, assume the modulus G* of the third material 36 is from 38%-75% of the modulus G* of the first material 32. The modulus G* of the third material 36 would be on the low end 0.6 MPa which is 37.5% or 38% of that of the first material 32, and on the high end would be 1.2 MPa which is 75% of that of the first material 32. In these examples, the ratio/percentage of the second material 34 is calculated by dividing the second material 48 modulus value by that of the first material 32 modulus value. In the case where the second material 34 modulus value is 1.4, the ratio is calculated as 1.4/1.6=0.875=87.5% or 88% as rounded up and as within and accounting for the plus or minus 0.5% error range in the tread 12. The ratio of the third material 36 can be arrived at in a similar manner. For example, if the modulus of the third material 36 is 0.6 MPa then the ratio would be 0.6/1.6=0.375=37.5% or 38% as rounded up and as within and accounting for the plus or minus 0.5% error range in the tread 12. Again, the error of the ratios expressed herein is plus or minus 0.5% so that a calculated number of 37.5% would include all percentages from 37% to 38% and any of the percentages from that range could be used to express the 37.5% calculated ratio.

Typical values for G* complex shear modulus at 60 °C for the first material 32 are 1.6, 1.4 and 1.2. Typical values for G* complex shear modulus at 60 °C for the second material 34 are 1.4, 1.2, 1.0, and 0.8. Typical values for G* complex shear modulus at 60 °C for the third material 36 are 1.2, 1.0, 0.8, and 0.6.

The various materials 32, 34 and 36 may be each made up of their own subset of materials. For instance, the first material 32 may include styrene-butadiene rubber, carbon black, processing oil, antioxidant, stearic acid, zinc oxidant, an accelerator, and sulfur. The second material 34 may include natural rubber instead of or in addition to styrene-butadiene rubber and may include different materials from the ones listed for the first material 32. The third material 36 may have materials different from those of the first material 32 and the second material 34 to render the third material 36 a yet different material than the first and second materials 32, 34. It is also to be understood that the various materials 32, 34 and 36 could all in fact include the same subset of materials, but this subset could be provided in different amounts between the materials to render them different. For instance, the first material 32 may be made up of styrene-butadiene rubber, carbon black, processing oil, antioxidant, stearic acid, zinc oxidant, an accelerator, and sulfur. The second material 34 may include the same subset of materials just listed for the first material 32, but may have more processing oil present in order to render the second material 34 a material different than the first material 32, and to render the second material 34 softer and more flexible and thus with a lesser modulus so as to fall within the desired listed range. The third material 36 may also include the same subset of materials listed for the first material 32, but may have an even greater amount of processing oil present than the second material 34 in order to make the third material 36 softer and more flexible than the first material 32 and the second material 34, and to cause the third material 36 to have a lower modulus than the first and second materials 32 and 34 so as to fall within the desired listed range.

The robustness of the tread 12 sculpture may be increased because more rigid tread 12 material 32 is used around the teardrop sipes 38 in the shoulders 40 and 42. New and worn adherence may be improved because softer tread 12 materials 34 and 36 are present in the center area 44 of the tread 12. The present design may also improve wear due to more uniform tread block rigidity throughout the tread 12. Also, rolling resistance degradation due to the utilization of softer tread 12 materials may be minimized.

The tire 10 can be arranged in a variety of alternative manners as will be discussed and as illustrated in the figures. Fig. 3 shows an alternate arrangement in which the third material 36 is not present. The first material 32 is located in the outboard shoulder area 40 and the inboard shoulder area 42, and the second material 34 is located in the center area 44. None of the first material 32 is in the center area 44, and none of the second material 34 is in the outboard shoulder area 40 or inboard shoulder area 42. The teardrop sipes 38 are present only in the first material 38 and are not in the second material 34. The second material 34 does not have any sipes 26 located therein, but there could be sipes 26 within the second material 34 in other embodiments. The center area 44 has a first rib 54, second rib 56, and third rib 58. A third circumferential groove 50 separates the first rib 54 from the second rib 56, and a fourth circumferential groove 52 separates the second rib 56 from the third rib 58. Although three ribs and two circumferential grooves are present in the center area 44, it is to be understood that any number of ribs and any number of circumferential grooves may be present in accordance with other exemplary embodiments. The ribs 54, 56 and 58 may include or make up tread blocks of the tread 12. The second material 34 rests on top of the under tread 66 in the radial direction 20, and the second material 34 is separated from the first material 32 in the axial direction 18 by the first and second circumferential grooves 46 and 48.

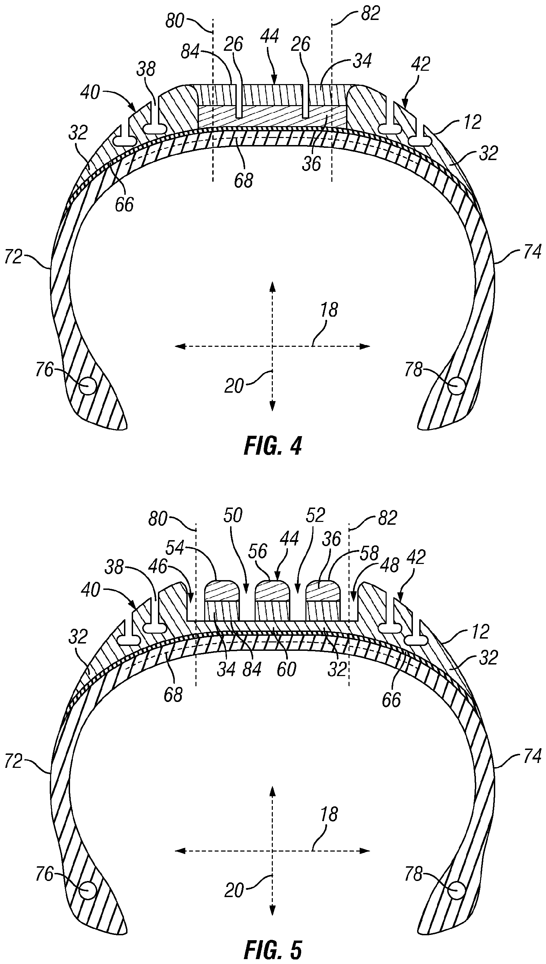

Fig. 4 shows an alternate arrangement of the tread 12 in which the first material 32 is located only in the outboard and inboard shoulder areas 40, 42 and in which the second and third materials are located only in the center area 44. The tread 12 lacks ribs and circumferential grooves. The tread 12 may be a racing slick in certain embodiments. The boundary lines 80 and 82 are straight in the radial direction 20, but it is to be understood that they may be curved or angled in other arrangements and function to separate the outboard and inboard shoulder areas 40, 42 of the tread 12 from the center area 44 as previously discussed. Sipes 26 are again present in the second and third materials 34, 36, but it is to be understood that in other arrangements the sipes 26 need not be present. In yet other arrangements, the sipes 26 are present but are included in the second material 34 but not the third material 36. The teardrop sipes 38 are located in the first material 32 but are not located in the second or third materials 34 or 36. The use of materials 32, 34 and 36 with the aforementioned ratios of rigidity could be applied with tires 10 that are thus non-ribbed or directional.

Fig. 5 shows another arrangement of the tread 12 that includes teardrop sipes 38 in the first material 32. Three ribs 54, 56 and 58 are located in the center area 44 along with the third and fourth circumferential grooves 50, 52. The first and second circumferential grooves 46 and 48 separate the outboard and inboard shoulder areas 40, 42 from the center area 44 and the boundary lines 80, 82 are also located at the first and second circumferential grooves 46, 48. Sipes 26 are not present in the second material 34 or the third material 36, and the third material 36 is located farther away from the central axis 24 of the tire 10 in the radial direction 20 than the second material 34. As such, it is to be understood that in the various embodiments that the relative positioning of the second material 34 and the third material 36 can be changed so that either one of them is farther from the central axis 24 in the radial direction 20 than the other.

The first material 32 is present along the entire axial length of the tread 12 in the axial direction 18. In this regard, the first material 32 is present in the outboard shoulder area 40, the inboard shoulder area 42, and the center area 44. A portion of the first material 32 is arranged as a layer 60 that extends from the outboard shoulder area 40 to the inboard shoulder area 42. The first material 32 is thus present in the outboard shoulder area 40, the inboard shoulder area 42, and the center area 44 of the tread 12. The layer 60 is contiguous with the under tread 66 and is located farther from the central axis 24 of the tire 12 in the radial direction 20 than the under tread 66 along its length. In the center area 44, the third and fourth circumferential grooves 50 and 52 do not extend into the layer 60 as illustrated, but it is to be understood that these grooves 50 and 52 could in fact extend into the layer 60 in other arrangements. No teardrop sipes 38 are present in the first material 32 in the center area 44. However, in other arrangements there may be teardrop sipes 38 within the first material 32 in the center area 44 in addition to, or alternatively to, teardrop sipes 38 being present in the first material 32 located within the outboard shoulder area 40 and the inboard shoulder area 42. The first material 32 thus covers the entire tread 12, and could be applied in a thin layer in the center area 44 while subsequently the second material 34 could be applied over the first material 32, and then after that the third material 36 could in turn be applied over the second material 34.

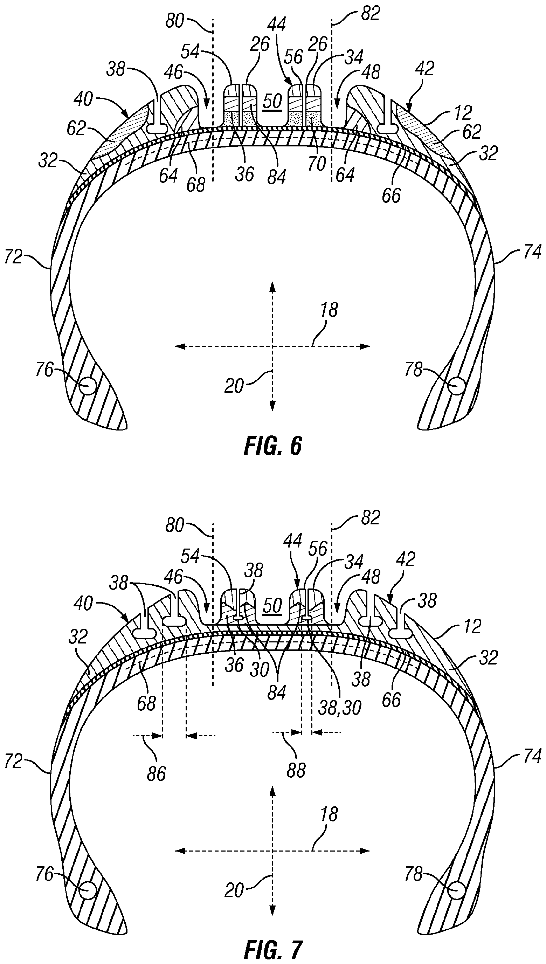

Fig. 6 illustrates an arrangement of the tire 10 in which additional material 62, 64 and 70 is located within the tread 12. In the inboard and outboard shoulder areas 40 and 42, the first material 32 is present, and the teardrop sipes 38 are formed in the first material 32. It is to be understood that as used herein that if the teardrop sipes 38 are described as being located in the first material 32 that this means that the first material 32 either completely defines the teardrop sipe 38, or that the first material 32 partially defines the teardrop sipe 38 such that some other material or materials also partially define the teardrop sipe 38 in order to fully define the teardrop sipe 38.

A fourth material 62 is also present in the tread 12 and can have a modulus value that is the same as or different than the other materials 32, 34 and 36 in other portions of the tread 12. The fourth material 62 can be located so as to make up the exterior portions of the tread 12, and as shown may at least partially define the teardrop sipes 38. The fourth material 62 is located in the outboard shoulder area 40 and in the inboard shoulder area 42 but is not found in the center area 44, although it may be in other arrangements. A fifth material 64 is also present in the tread 12 and is located at the outboard shoulder area 40 and the inboard shoulder area 42. The fifth material 64 may have the same modulus value or may have a different modulus value than the other materials 32, 34 and 36 in the tread 12. The fifth material 64 defines a portion of the first circumferential groove 46 and a portion of the second circumferential groove 48, but does not define any of the teardrop sipes 38. The fifth material 64 engages the first material 32 and the under tread 66. A sixth material 70 is present in the center area 44 and engages the under tread 66 and partially defines the circumferential grooves 42, 48 and 50. The sixth material 70 also engages the third material 36 and is the portion of the ribs 54 and 56 that is closest to the central axis 24 in the radial direction 20 of the tire 10. The sixth material may have a modulus that is the same as that of the other materials 32, 34 and 36 or may have a modulus that is different than these materials. The first material 32 may be the most rigid material in the tread 12, or may be less rigid than some of the materials 62, 64 and/or 70, but still has a higher modulus than the second and third materials 34, 36. Numerous material combinations exist and any number of materials may be present so long as at least two materials are present in which the rigidity is different.

Another arrangement of the tire 10 is illustrated with reference to Fig. 7 in which the teardrop sipes 38 are defined in the first material 32 that is located in the outboard shoulder area 40 and the inboard shoulder area 42. The second and third materials 34 and 36 are located at the center area 44 and the third material 36 engages the under tread 66 while the second material 34 is located farther from the central axis 24 in the radial direction 20 than the third material 36. The second material 34 and the third material 36 engage one another at an interface 84. The interface 84 has a wavy cross-sectional shape. The shape of the interface 84 may be different in other exemplary embodiments. For instance, the shape of the interface 84 may be half-circles, triangles, various angles, squares, or straight across as is illustrated in the other figures.

There are teardrop sipes 38 also located in the second material 34 and the third material 36, in addition to those teardrop sipes 38 located in the first material 32. In other arrangements, there may be teardrop sipes 38 in the second material 34 but not the third material 36. The largest teardrop sipe 38 present in the tire 10 may be in the first material 32. This means that either there are no teardrop sipes 38 present in areas of the tire 10 other than the first material 32, or if they are present in other areas of the tire 10 besides the first material 32 they are not larger than the teardrop sipes 38 that are located in the first material 32. The size of the teardrop sipes 38 is the cross-sectional width of the teardrop void 30. With reference to Fig. 7, the teardrop sipe 38 in the first material 32 has a teardrop void 30 with a cross-sectional width 86. The teardrop sipe 38 in the second and third materials 34, 36 has a cross-sectional width 88 that is less than the cross-sectional width 86 of the teardrop sipe 38 in the first material 32.

It may be the case that there are teardrop sipes 38 with a larger cross-sectional width 88 in the second and/or third materials 34, 36 than a teardrop sipe 38 in the first material 32 with a cross-sectional width 86. However, the number of these teardrop sipes 38 will be small compared to the rest of the teardrop sipes 38 in the second and/or third materials 34, 36. No more than five percent of these teardrop sipes 38 in the second and/or third materials 34, 36 will have cross-sectional width 86 that is greater than or equal to the cross-sectional width 88 of the largest teardrop sipe 38 in the first material 32. In other arrangements, no more than two percent of the teardrop sipes 38 in the second and/or third materials 34, 36 will have a larger or equal cross-sectional width 86 compared to the cross-sectional width 88 of the largest teardrop sipe 38 in the first material 32. In yet other arrangements, none of the teardrop sipes 38 in the second and/or third materials 34, 36 have a larger cross-sectional width 88 than the cross-sectional width 86 of the largest sipe 38 in the first material 32. In still other embodiments, no teardrop sipes 38 are located in the second and/or third materials 34, 36, but teardrop sipes 38 are present in the first material 32. The aforementioned percentages are calculated with respect to the teardrop sipes 38 present in the second and/or third materials 34, 36 and do not include those teardrop sipes 38 in the first material 32 or other portions of the tire 10.

Fig. 8 shows an alternative arrangement of the tire 10 in which the first material 32 is located at the center area 44 but not at the outboard shoulder area 40 or the inboard shoulder area 42. The teardrop sipes 38 are located in the first material 32 and are not located in any other material of the tread 12. The second and third materials 34 and 36 are found in the outboard shoulder area 40 and the inboard shoulder area 42 but are not present in the center area 44. The third material 36 engages the under tread 66 and is closer to the central axis 24 in the radial direction 20 than portions of the second material 34 that are adjacent to the third material's 36 extension in the axial direction 18. The second material 34 forms the exterior surface of the outboard and inboard shoulder areas 40 and 42 and engages a small portion of the under tread 66. Although the second material 34 is shown as being laid on top of the third material 36 so as to be located farther from the central axis 24 in the radial direction 20, it is to be understood that in the various arrangements of the tire 10 discussed herein that the third material 36 if present may be arranged onto the second material 34 so that the third material 36 is farther from the central axis 24 in the radial direction 20 than the second material 34.

The teardrop sipes 38 illustrated herein in the drawings are oriented in such a manner in the tire 10 so as to be longitudinal teardrop sipes 38. In this regard, the teardrop sipes 38 extend in the circumferential direction 22 and do not have an extension in the axial direction 18. However, it is to be understood that the teardrop sipes 38 and the sipes 26 could be lateral in orientation instead of being longitudinal in various embodiments and that there is no limitation on their orientation and that those primarily illustrated in the drawings are simply for sake of convenience. With reference to Fig. 9, the teardrop sipes 38 are oriented as lateral teardrop sipes 38 as their cross-sectional widths extend in the circumferential direction 28 instead of in the axial direction 18. Although the teardrop sipes 38 extend to the first circumferential groove 46, they need not extend to the first circumferential groove 46 in other arrangements and may instead be located in the first material 32 of the outboard shoulder area 40 such that their cross-sectional form would not show in Fig. 9. The direction of extension of the teardrop sipes 38, and the sipes 26 of the tire 10, can be in any direction and may be transverse, lateral, or some combination of the two in various arrangements. The cross-sectional widths described may be the widths of the teardrop sipes 38 upon their longitudinal extension in the various directions they may be oriented in the tire 10.

The various cross-sectional views of the tire 10 shown in Figs. 2-8 are illustrated so that the various materials 32, 34, 36, 62, 64 and 70 are assigned a different color in the figures to aid in differentiating their appearance and placement. The first material 32 is green, the second material 34 is red, the third material 36 is blue, the fourth material 62 is black, the fifth material 64 is brown, and the sixth material 70 is assigned the color violet.

## Claims

1. A tire, comprising:
tread (12) that has a first material (32) and a second material (34), wherein the first material has a G* complex shear modulus at 60 °C that is greater than a G* complex shear modulus at 60 °C of the second material such that the first material is more rigid than the second material, wherein the G* complex shear modulus at 60 °C of the second material is from 50%-88% of the G* complex shear modulus at 60 °C of the first material, wherein the tread has a plurality of teardrop sipes (38) that each have a teardrop void that has a cross-sectional width, wherein one of the teardrop sipes is located in the first material with the teardrop void cross-sectional width sized such that no more than five percent of the other teardrop sipes located in the second material have a larger than or equal teardrop void cross-sectional width.

2. The tire as set forth in claim 1, wherein no teardrop sipes are located in the second material.

3. The tire as set forth in claims 1 or 2, wherein the tread has a third material (36) that has a G* complex shear modulus at 60 °C that is less than the G* complex shear modulus at 60 °C of the first material and is less than the G* complex shear modulus at 60 °C of the second material such that the third material is less rigid than the first material and is less rigid than the second material, wherein the G* complex shear modulus at 60 °C of the third material is from 38%-75% of the G* complex shear modulus at 60 °C of the first material.

4. The tire as set forth in claim 3, wherein no teardrop sipes are located in the third material.

5. The tire as set forth in any one of claims 1-4, wherein the tire has a central axis (24) that extends in an axial direction of the tire, wherein the tread is spaced from the central axis in a radial direction of the tire, wherein the tread has an outboard shoulder area (40) and an inboard shoulder area (42), wherein the outboard shoulder area is spaced from the inboard shoulder area in the axial direction, wherein the tread has a center area (44) that is located between the inboard shoulder area and the outboard shoulder area in the axial direction.

6. The tire as set forth in claim 5, wherein the first material is located in the outboard shoulder area and in the inboard shoulder area and wherein the teardrop sipes are located in both the outboard shoulder area and the inboard shoulder area, wherein the second material and the third material are located in the center area.

7. The tire as set forth in claim 6, wherein none of the first material is located in the center area, wherein none of the second and third materials are located in the inboard shoulder area, and wherein none of the second and third materials are located in the outboard shoulder area.

8. The tire as set forth in claim 6 or 7, wherein a first circumferential groove (46) is located between the outboard shoulder area and the center area in the radial direction and separates the outboard shoulder area from the center area, and wherein a second circumferential groove (48) is located between the inboard shoulder area and the center area in the radial direction and separates the inboard shoulder area from the center area.

9. The tire as set forth in claim 6 or 7, wherein the tread does not have any circumferential grooves and does not have any ribs.

10. The tire as set forth in claim 5 or 6, wherein the first material is located in the outboard shoulder area, the inboard shoulder area, and the center area.

11. The tire as set forth in claim 10, wherein the first material extends along an entire axial length of the tread, wherein in the center area the first material is located closer to the central axis in the radial direction than the second material, and wherein in the center area the first material is located closer to the central axis in the radial direction than the third material.

12. The tire as set forth in claim 5, wherein the outboard shoulder area includes material (62) in addition to the first material, and wherein all of the material in the outboard shoulder area has a G* complex shear modulus at 60 °C that is from 75%-100% of the G* complex shear modulus at 60 °C of the first material; and
wherein the inboard shoulder area includes material in addition to the first material, and wherein all of the material in the inboard shoulder area has a G* complex shear modulus at 60 °C that is from 75%-100% of the G* complex shear modulus at 60 °C of the first material.

13. The tire as set forth in any one of claims 3-12, wherein the third material is located closer to the central axis in the radial direction than the second material.

14. The tire as set forth in any one of claims 3-12, wherein the tread has an under tread (66) that is located closer to the central axis in the radial direction than the first material and the second material, wherein the second material is located closer to the central axis in the radial direction than the third material; and
further comprising a metal belt (68) located closer to the central axis in the radial direction than the first material and the second material.

15. The tire as set forth in any one of the preceding claims, wherein the first material and the second material are made of the same ingredients but are made of different proportions of the same ingredients.

## Patentansprüche

1. Reifen, umfassend:
Reifenlauffläche, die ein erstes Material (32) und ein zweites Material (34) hat, wobei das erste Material einen G* komplexen Schermodul bei 60 °C hat, der größer als ein G* komplexer Schermodul bei 60 °C des zweiten Materials ist, derart dass das erste Material steifer als das zweite Material ist, wobei der G* komplexe Schermodul bei 60 °C des zweiten Materials 50 % - 88 % des G* komplexen Schermoduls bei 60 °C des ersten Materials ist, wobei die Lauffläche eine Vielzahl von tropfenförmigen Feineinschnitten (38) hat, die jeweils einen tropfenförmigen Hohlraum haben, der eine Querschnittsbreite hat, wobei eine der tropfenförmigen Feineinschnitte sich im ersten Material befindet, wobei die Querschnittsbreite des tropfenförmigen Hohlraums so bemessen ist, dass nicht mehr als fünf Prozent der anderen tropfenförmigen Feineinschnitte, die sich im zweiten Material befinden, eine größere oder gleiche Querschnittsbreite des tropfenförmigen Hohlraums haben.

2. Reifen nach Anspruch 1, wobei sich keine tropfenförmigen Feineinschnitte im zweiten Material befinden.

3. Reifen nach Anspruch 1 oder 2, wobei die Reifenlauffläche ein drittes Material (36) hat, welches einen G*komplexen Schermodul bei 60 °C hat, der kleiner als der G* komplexe Schermodul bei 60 °C des ersten Materials ist und der kleiner als der G* komplexe Schermodul bei 60° des zweiten Materials ist, derart dass das dritte Material weniger steif als das erste Material ist und weniger steif als das zweite Material ist, wobei der G* komplexe Schermodul bei 60° des dritten Materials 38 % - 75 % des G* komplexen Schermoduls bei 60° des ersten Materials ist.

4. Reifen nach Anspruch 3, wobei sich im dritten Material keine tropfenförmigen Feineinschnitte befinden.

5. Reifen nach einem der Ansprüche 1-4, wobei der Reifen eine Mittelachse (24) hat, die sich in einer axialen Richtung des Reifens erstreckt, wobei die Reifenlauffläche mit Abstand von der Mittelachse in einer radialen Richtung des Reifens angeordnet ist, wobei die Reifenlauffläche einen außen liegenden Schulterbereich (40) und einen innen liegenden Schulterbereich (42) hat;
wobei der außen liegende Schulterbereich mit Abstand vom innen liegenden Schulterbereich in axialer Richtung angeordnet ist, wobei die Reifenlauffläche einen Mittelbereich (44) hat,
der sich zwischen dem innen liegenden Schulterbereich und dem außen liegenden Schulterbereich in axialer Richtung befindet.

6. Reifen nach Anspruch 5, wobei sich das erste Material im außen liegenden Schulterbereich und im innen liegenden Schulterbereich befindet und wobei sich die tropfenförmigen Feineinschnitte sowohl im außen liegenden Schulterbereich wie auch im innen liegenden Schulterbereich befinden, wobei sich das zweite Material und das dritte Material im Mittelbereich befinden.

7. Reifen nach Anspruch 6, wobei sich kein erstes Material im Mittelbereich befindet, wobei sich kein zweites und drittes Material im innen liegenden Schulterbereich befindet und wobei sich kein zweites und drittes Material im außen liegenden Schulterbereich befindet.

8. Reifen nach Anspruch 6 oder 7, wobei sich eine erste Umfangsnut (46) zwischen dem außen liegenden Schulterbereich und dem Mittelbereich in radialer Richtung befindet und den außen liegenden Schulterbereich vom Mittelbereich trennt, und wobei sich eine zweite Umfangsnut (48) zwischen dem innen liegenden Schulterbereich und dem Mittelbereich in radialer Richtung befindet und den innen liegenden Schulterbereich vom Mittelbereich trennt.

9. Reifen nach Anspruch 6 oder 7, wobei die Reifenlauffläche keine Umfangsnuten und keine Rippen hat.

10. Reifen nach Anspruch 5 oder 6, wobei sich das erste Material im außen liegenden Schulterbereich, im innen liegenden Schulterbereich und im Mittelbereich befindet.

11. Reifen nach Anspruch 10, wobei sich das erste Material entlang einer gesamten axialen Länge der Reifenlauffläche erstreckt, wobei sich das erste Material im Mittelbereich näher an der Mittelachse in radialer Richtung als das zweite Material befindet und wobei im Mittelbereich sich das Erstmaterial näher an der Mittelachse in radialer Richtung als das dritte Material befindet.

12. Reifen nach Anspruch 5, wobei der außen liegende Schulterbereich Material (62) zusätzlich zum ersten Material enthält, und wobei das gesamte Material im außen liegenden Schulterbereich einen G* komplexen Schermodul bei 60 °C hat, der 75 % - 100 % des G* komplexen Schermoduls bei 60° des ersten Materials beträgt; und
wobei der innen liegende Schulterbereich Material zusätzlich zum ersten Material enthält und wobei das gesamte Material im innen liegenden Schulterbereich einen G* komplexen Schermodul bei 60 °C hat, der 75 % - 100 % des G* komplexen Schermoduls bei 60 °C des ersten Materials beträgt.

13. Reifen nach einem der Ansprüche 3-12, wobei sich das dritte Material näher an der Mittelachse in radialer Richtung als das zweite Material befindet.

14. Reifen nach einem der Ansprüche 3-12, wobei die Reifenlauffläche einen Zwischenaufbau (66) hat, der sich näher an der Mittelachse in radialer Richtung als das erste Material und das zweite Material befindet, wobei sich das zweite Material näher an der Mittelachse in radialer Richtung als das dritte Material befindet;
ferner einen Metallgürtel (68) umfasst, der sich näher an der Mittelachse in radialer Richtung als das erste Material und das zweite Material befindet.

15. Reifen nach einem der vorherigen Ansprüche, wobei das erste Material und das zweite Material aus denselben Inhaltsstoffen hergestellt sind, aber aus unterschiedlichen Anteilen derselben Inhaltsstoffe hergestellt sind.

## Revendications

1. Pneumatique, comprenant :
une bande de roulement (12), qui a un premier matériau (32) et un deuxième matériau (34),
dans lequel le premier matériau a un module de cisaillement complexe G* à 60° C, qui est supérieur à un module de cisaillement complexe G* à 60° C du deuxième matériau, de sorte que le premier matériau est plus rigide que le deuxième matériau,
dans lequel le module de cisaillement complexe G* à 60° C du deuxième matériau représente 50 % - 88 % du module de cisaillement complexe G* à 60° C du premier matériau,
dans lequel la bande de roulement a une pluralité de lamelles en forme de gouttes d'eau (38), qui ont chacune un vide en forme de goutte d'eau, qui a une largeur transversale,
dans lequel l'une des lamelles en forme de goutte d'eau est située dans le premier matériau, avec la largeur transversale du vide en forme de goutte d'eau dimensionnée de sorte qu'au maximum cinq pour cent des autres lamelles en forme de gouttes d'eau, situées dans le deuxième matériau, ont une largeur transversale du vide en forme de goutte d'eau supérieure ou égale.

2. Pneumatique selon la revendication 1, dans lequel aucune lamelle en forme de goutte d'eau n'est située dans le deuxième matériau.

3. Pneumatique selon les revendications 1 ou 2,
dans lequel la bande de roulement a un troisième matériau (36) qui a un module de cisaillement complexe G* à 60° C qui est inférieur au module de cisaillement complexe G* à 60° C du premier matériau et est inférieur au module de cisaillement complexe G* à 60° C du deuxième matériau, de sorte que le troisième matériau est moins rigide que le premier matériau et est moins rigide que le deuxième matériau,
dans lequel le module de cisaillement complexe G* à 60° C du troisième matériau représente 38 % - 75 % du module de cisaillement complexe G* à 60° C du premier matériau.

4. Pneumatique selon la revendication 3, dans lequel aucune lamelle en forme de goutte d'eau n'est située dans le troisième matériau.

5. Pneumatique selon l'une quelconque des revendications 1 à 4,
dans lequel le pneumatique a un axe central (24) qui s'étend dans une direction axiale du pneumatique,
dans lequel la bande de roulement est espacée de l'axe central dans une direction radiale du pneumatique,
dans lequel la bande de roulement a une zone formant épaulement côté extérieur (40) et une zone formant épaulement côté intérieur (42),
dans lequel la zone formant épaulement côté extérieur est espacée de la zone formant épaulement côté intérieur dans la direction axiale,
dans lequel la bande de roulement a une zone centrale (44), qui est située entre la zone formant épaulement côté intérieur et la zone formant épaulement côté extérieur dans la direction axiale.

6. Pneumatique selon la revendication 5,
dans lequel le premier matériau est situé dans la zone formant épaulement côté extérieur et dans la zone formant épaulement côté intérieur et
dans lequel les lamelles en forme de gouttes d'eau sont situées à la fois dans la zone formant épaulement côté extérieur et dans la zone formant épaulement côté intérieur et
dans lequel le deuxième matériau et le troisième matériau sont situés dans la zone centrale.

7. Pneumatique selon la revendication 6,
dans lequel aucun du premier matériau n'est situé dans la zone centrale,
dans lequel aucun du deuxième et du troisième matériau n'est situé dans la zone formant épaulement côté intérieur et
dans lequel aucun du deuxième et du troisième matériau n'est situé dans la zone formant épaulement côté extérieur.

8. Pneumatique selon la revendication 6 ou 7,
dans lequel une première rainure circonférentielle (46) est située entre la zone formant épaulement côté extérieur et la zone centrale, dans la direction radiale et sépare la zone formant épaulement côté extérieur de la zone centrale et
dans lequel une seconde rainure circonférentielle (48) est située entre la zone formant épaulement côté intérieur et la zone centrale, dans la direction radiale et sépare la zone formant épaulement côté intérieur de la zone centrale.

9. Pneumatique selon la revendication 6 ou 7,
dans lequel la bande de roulement n'a pas de rainure circonférentielle quelconque et n'a pas de nervure quelconque.

10. Pneumatique selon la revendication 5 ou 6,
dans lequel le premier matériau est situé dans la zone formant épaulement côté extérieur, la zone formant épaulement côté intérieur et la zone centrale.

11. Pneumatique selon la revendication 10,
dans lequel le premier matériau s'étend le long d'une longueur axiale complète de la bande de roulement,
dans lequel, dans la zone centrale, le premier matériau est situé plus près de l'axe central, dans la direction radiale, que le deuxième matériau et
dans lequel, dans la zone centrale, le premier matériau est situé plus près de l'axe central, dans la direction radiale, que le troisième matériau.

12. Pneumatique selon la revendication 5,
dans lequel la zone formant épaulement côté extérieur comporte un matériau (62), en plus du premier matériau et
dans lequel la totalité du matériau dans la zone formant épaulement côté extérieur a un module de cisaillement complexe G* à 60° C qui représente 75 % - 100 % du module de cisaillement complexe G* à 60° C du premier matériau et
dans lequel la zone formant épaulement côté intérieur comporte un matériau en plus du premier matériau et
dans lequel la totalité du matériau dans la zone formant épaulement côté intérieur a un module de cisaillement complexe G* à 60° C qui représente 75 % - 100 % du module de cisaillement complexe G* à 60° C du premier matériau.

13. Pneumatique selon l'une quelconque des revendications 3 à 12,
dans lequel le troisième matériau est situé plus près de l'axe central, dans la direction radiale, que le deuxième matériau.

14. Pneumatique selon l'une quelconque des revendications 3 à 12,
dans lequel la bande de roulement a une bande de roulement inférieure (66), qui est située plus près de l'axe central, dans la direction radiale, que le premier matériau et le deuxième matériau,
dans lequel le deuxième matériau est situé plus près de l'axe central, dans la direction radiale, que le troisième matériau et comprend en outre une bande métallique (68), située plus près de l'axe central, dans la direction radiale, que le premier matériau et le deuxième matériau.

15. Pneumatique selon l'une quelconque des revendications précédentes,
dans lequel le premier matériau et le deuxième matériau sont faits avec les mêmes composants mais sont faits avec des proportions différentes des mêmes composants.
